# EUROPÄISCHE PATENTSCHRIFT

(11) **EP 3 539 371 B1**
(45) Veröffentlichungstag und Bekanntmachung des Hinweises auf die Patenterteilung: **05.08.2020**
(21) Anmeldenummer: 18161694.7
(22) Anmeldetag: 14.03.2018
(51) Int. Cl.: A01G 9/02

(54) **BAUEINHEIT FÜR BAUWERKE WIE FASSADEN, WÄNDE UND DÄCHER, MODULARES SYSTEM, ENTHALTEND MINDESTENS ZWEI BAUEINHEITEN SOWIE BAUWERK ENTHALTEND DIE BAUEINHEIT ODER DAS MODULARE SYSTEM**
ASSEMBLY FOR STRUCTURES SUCH AS FACADES, WALLS AND ROOFS, MODULAR SYSTEM, COMPRISING AT LEAST TWO ASSEMBLIES, AND STRUCTURE COMPRISING THE ASSEMBLY OR MODULAR SYSTEM
UNITÉ STRUCTURALE POUR BÂTIMENTS DE TYPE FAÇADES, PAROIS ET TOITS, SYSTÈME MODULAIRE CONTENANT AU MOINS DEUX UNITÉS STRUCTURALE AINSI QUE BÂTIMENT CONTENANT L'UNITÉ STRUCTURALE OU LE SYSTÈME MODULAIRE

(43) Veröffentlichungstag der Anmeldung: 18.09.2019
(73) Patentinhaber: DAW SE, 64372 Ober-Ramstadt (DE); Green City Solutions GmbH, 10829 Berlin (DE)
(72) Erfinder: GIMPEL-HENNING, Max, 14193 Berlin (DE); VAUPEL, Gerd, 36214 Nentershausen (DE); SCHNEIDER, Alina, 36208 Wildeck (DE); BRANDAU, Kai, 36205 Sontra (DE); BROX, Matthias, 36199 Rotenburg (DE)
(74) Vertreter: Metten, Karl-Heinz

(56) Entgegenhaltungen:
- WO-A1-2014/097660
- WO-A1-2015/045087
- WO-A1-2017/170583
- DE-B3-102014 114 307
- DE-U1-202017 103 650
- FR-A1- 2 872 381
- FR-A1- 2 968 891
- US-A- 4 975 251
- Jörg Dettmar ET AL: "Gutachten Fassadenbegrünung", , 1 June 2016 (2016-06-01), pages 1-100, XP055604452, Darmstadt (DE) Retrieved from the Internet: URL:https://www.umwelt.nrw.de/fileadmin/re daktion/PDFs/klima/gutachten_fassadenbegru enung.pdf [retrieved on 2019-07-10]

## Beschreibung

Die vorliegende Erfindung betrifft eine Baueinheit für Bauwerke wie Fassaden, Wände und Dächer sowie ein modulares System, enthaltend oder gebildet aus mindestens zwei, insbesondere einer Vielzahl an miteinander direkt oder indirekt verbundenen erfindungsgemäßen Baueinheiten sowie ein Bauwerk wie eine Gebäudefassade, eine Gebäudewand oder ein Gebäudedach enthaltend mindestens eine erfindungsgemäße Baueinheit und/oder mindestens ein erfindungsgemäßes modulares System.

Es gibt vielfältige Bemühungen, urbanes Bauen umweltgerecht zu gestalten. Allerdings sind solchen Bestrebungen häufig aus vielfältigen Gründen enge Grenzen gesetzt. Beispielsweise ist von eng bebauten Stadtgebieten die Bildung sogenannter Hitzeinseln während sommerlicher Hitzeperioden bekannt. Dieses für viele Anwohner auch körperlich belastende Phänomen lässt sich durch das Vorsehen von Grüngürteln bzw. bepflanzen Einheiten verhindern oder signifikant zurückdrängen. Vielfach sind derartige Grünzonen stadtplanerisch allerdings nicht immer zu verwirklichen. Um gleichwohl nicht auf die Vorteile komplett verzichten zu müssen, die mit Grünzonen bzw. Grünflächen in Städten einhergehen, hat es nicht an Versuchen gefehlt, Gebäudedächer oder Fassadenflächen zu begrünen. Exemplarisch sei hierfür auf die DE 10 2010 045 665 B4, DE 10 2010 045 666 B4, DE 10 2014 114 307 B3 und DE 20 2016 002 910 U1 verwiesen. So kann es schon mit herkömmlichen Fassadenbegrünungen gelingen, vornehmlich bedingt durch Verdunstungsphänomene, die Temperatur in der Nähe solcher begrünter Gebäude zu verringern.

Häufig gelingt die insbesondere dauerhafte Begrünung bzw. Bepflanzung von insbesondere großformatigen Fassadenflächen nicht einwandfrei, beispielsweise weil Pflanzenareale nicht hinreichend mit Feuchtigkeit versorgt werden. Andererseits gestaltet sich bislang die Bewässerung von bepflanzten Fassadenflächen relativ aufwendig und kostenintensiv. Auch wird das Potenzial begrünter Fassadenflächen, insbesondere in kompakt bebauten Stadtvierteln, bei weitem nicht ausgeschöpft.

WO 2015/045087 offenbart ein Begrünungssystem für Fassadenflächen.

Daher lag der vorliegenden Erfindung die Aufgabe zugrunde, eine konstruktiv einfache und überdies zuverlässige Anbringung von groß- wie auch kleinflächigen Pflanzenarealen an Fassadenflächen zu gewährleisten. Ferner lag der Erfindung die Aufgabe zugrunde, durch geeignete Fassadenbegrünung das Stadtklima auch in bestehenden Wohnvierteln zu verbessern.

Demgemäß wurde eine Baueinheit nach Anspruch 1 für ein Bauwerk wie eine Fassade, eine Wand oder ein Dach, insbesondere eine Baueinheit wie eine Gebäudefassade, eine Gebäudewand oder ein Gebäudedach, mit einer Vorder- und einer Rückseite gefunden, umfassend ein Pflanzentragemodul, umfassend oder gebildet aus mindestens einer Pflanzentrageeinheit, umfassend ein Basisareal, mit einer Vorder- und einer Rückseite, mindestens ein, insbesondere rückseitiges, Halterungselement ausgelegt und eingerichtet für die Anbringung der Baueinheit an einem Bauwerk wie Fassade, Wand oder Dach, mindestens eine Luftzuführeinheit angeordnet auf, an oder im Bereich der Rückseite des Pflanzentragemoduls und ausgelegt und eingerichtet, um Luft im Bereich der mindestens einen Pflanzentrageeinheit, insbesondere im Bereich des Pflanzentragemoduls, von der Rück- in Richtung der Vorderseite zu transferieren. Als geeignete Luftzuführeinheit kann beispielsweise auf einen oder eine Vielzahl an Ventilatoren zurückgegriffen werden.

Wenn im Sinne der vorliegenden Erfindung von einer Fassade, einer Wand oder einem Dach gesprochen wird, handelt es sich vorzugsweise um eine Gebäudefassade, eine Gebäudewand bzw. eine Gebäudedach.

Dabei kann die erfindungsgemäße Baueinheit in einer Ausführungsform einen Rahmen mit einem bei gattungsgemäßer Verwendung oberen Randelement und einem gegenüberliegenden unteren Randelement aufweisen, wobei sich zwischen dem oberen und dem unterem Randelement eine flächige Pflanzentrageeinheit erstreckt.

Das Pflanzentragemodul, die Pflanzentrageeinheit oder das Basisareal können dabei aus Metall, insbesondere rostfreiem Metall, und/oder Kunststoff gefertigt sein. Zweckmäßigerweise wird hierfür aus Gründen der Stabilität auf Metallbauteile zurückgegriffen.

Die mindestens eine, insbesondere flächige, Pflanzentrageeinheit oder das Basisareal umfassen in einer bevorzugten Ausführungsform dabei eine, insbesondere metallische, Gitter- oder eine Maschenstruktur oder stellen eine solche dar. Dabei kann in einer zweckmäßigen Ausgestaltung vorgesehen sein, dass die Gitterstruktur einen durchschnittlichen Abstand benachbarter Gitterstreben kleiner 10 cm, bevorzugt kleiner 8 cm und besonders bevorzugt im Bereich von 0,5 cm bis 6 cm, aufweist oder dass die Maschenstruktur einen durchschnittlichen Maschendurchmesser kleiner 10 cm, bevorzugt kleiner 8 cm und besonders bevorzugt im Bereich von 0,5 cm bis 6 cm, aufweist.

Für viele Anwendungen hat es sich als besonders vorteilhaft erwiesen, wenn die Pflanzentrageeinheit bei vertikaler Ausrichtung vorderseitig über ein unteres Randelement sowie gegebenenfalls über ein gegenüberliegendes oberes Randelement verfügt. Hier kann sich die mindestens eine, insbesondere flächige, Pflanzentrageeinheit oder das Basisareal der Pflanzentrageeinheit vorzugsweise in Richtung von dem oberen zu dem unteren Randelement, insbesondere zwischen oberem und unterem Randelement, erstrecken.

Die erfindungsgemäßen Baueinheiten sind bereits mit einer durchschnittlichen Dicke, gemessen von der Vorder- zu der Rückseite, im Bereich von 10 cm bis 40 cm, insbesondere im Bereich von 15 cm bis 30 cm, einsatzfertig und können zum Beispiel für die Integration in Fassaden verwendet werden.

Mit der erfindungsgemäßen Baueinheit gelingt es überraschend, Fassaden-, Wand- und Dachelemente zur Verfügung zu stellen, die den Nutzer in die Lage versetzen, das Mikroklima in der Nähe der mit diesen erfindungsgemäßen Einheiten ausgestatteten Fassaden, Wände oder Dächer positiv zu beeinflussen.

Nach der Erfindung verfügt die erfindungsgemäße Baueinheit ferner über mindestens eine an der Vorderseite des Basisareals der Pflanzentrageeinheit vorliegende Mooslage, und mindestens eine an der Rückseite des Basisareals der Pflanzentrageeinheit vorliegende Mooslage.

Mit den hier genannten erfindungsgemäßen Baueinheiten gelingt es überraschenderweise, den Feinstaubanteil in der Umgebungsluft signifikant zu reduzieren. Gemäß dem "National Air Quality"-Standard for Particulate Matter (kurz als PM-Standard bezeichnet) der USamerikanischen Umweltschutzbehörde EPA (Environmental Protection Agency) lässt sich Feinstaub mit dem Standard PM₁₀ erfassen. Mit diesem Standard wird versucht, das Abscheideverhalten der oberen Atemwege nachzubilden, wobei Partikel mit einem aerodynamischen Durchmesser von weniger als 1 µm vollständig einbezogen werden, während bei größeren Partikeln nur ein gewisser Prozentsatz gewertet wird. Dieser nimmt mit zunehmender Partikelgröße ab und erreicht bei ca. 15 µm 0 %. Bei diesem Standard PM₁₀ gehen ab ca. 10 µm genau die Hälfte der Partikel in die Gewichtung ein.

Überraschenderweise haben sich derartige Ausgestaltungen der erfindungsgemäßen Baueinheit als besonders geeignet bei der Lösung der der Erfindung zugrunde liegenden Aufgabe erwiesen, die mindestens eine an der Vorderseite des Basisareals der Pflanzentrageeinheit vorliegende erste Pflanzenlage, insbesondere erste Mooslage, und darüber hinaus mindestens eine an oder auf der ersten Pflanzenlage, insbesondere ersten Mooslage, jenseits des Basisareals der Pflanzentrageeinheit, vorliegende mindestens eine zweite Pflanzenlage, insbesondere zweite Mooslage, aufweisen, oder die mindestens eine an der Rückseite des Basisareals der Pflanzentrageeinheit vorliegende erste Pflanzenlage, insbesondere erste Mooslage, und darüber hinaus mindestens eine an der Vorderseite des Basisareals der Pflanzentrageeinheit vorliegende mindestens eine zweite Pflanzenlage, insbesondere zweite Mooslage, aufweisen, oder die die mindestens eine an der Rückseite des Basisareals der Pflanzentrageeinheit anliegende zweite Pflanzenlage, insbesondere zweite Mooslage, und darüber hinaus mindestens eine an oder auf der zweiten Pflanzenlage, insbesondere zweiten Mooslage, jenseits der Rückseite des Basisareals der Pflanzentrageeinheit, vorliegende mindestens eine erste Pflanzenlage, insbesondere erste Mooslage, aufweisen.

Als geeignetes Pflanzen- bzw. Moosmaterial wird erfindungsgemäß auf Laubmoos aus der Familie der Grimmiaceae, insbesondere Polster-Kissenmoos (Grimmia pulvinata), zurückgegriffen. Zusätzlich wird auch Laubmoos aus der Familie der Neckermoose, insbesondere Streifenfarn-Flachmoos (Homalia trichomanoides) verwendet.

Nach der Erfindung liegen zwei unterschiedliche Mooslagen in der erfindungsgemäßen Baueinheit vor. Nach der Erfindung hat es sich als besonders vorteilhaft erwiesen, wenn die erste, vorderseitige, Mooslage Laubmoos aus der Familie der *Grimmiaceae,* insbesondere Polster-Kissenmoos (*Grimmia pulvinata*), umfasst oder darstellt und wenn die zweite, rückseitige, Mooslage Laubmoos aus der Familie der Neckermoose, insbesondere Streifenfarn-Flachmoos (*Homalia trichomanoides*) umfasst oder darstellt.

In einer zweckmäßigen Ausgestaltung der erfindungsgemäßen Baueinheit kann vorgesehen sein, dass die mindestens eine erste, insbesondere vorderseitige, Pflanzenlage, insbesondere Mooslage, eine durchschnittliche Dicke im Bereich von 4 cm bis 20 cm, insbesondere im Bereich von 6 cm bis 12 cm, aufweist. Alternativ oder zusätzlich kann dabei vorgesehen sein, dass die mindestens eine zweite, insbesondere rückseitige, Pflanzenlage, insbesondere Mooslage, eine durchschnittliche Dicke im Bereich von 4 cm bis 20 cm, insbesondere im Bereich von 6 cm bis 12 cm, aufweist.

Die Pflanzen- bzw. Mooslage kann auf herkömmliche Weise an der Vorder- und/oder Rückseite des Basisareals der Pflanzentrageeinheit an- bzw. eingebracht werden. In der Regel versieht man das Basisareal bzw. die Pflanzentrageeinheit vorder- und/oder rückseitig, insbesondere vorderseitig, vollflächig mit einer Pflanzen- bzw. Mooslage. Dabei erstreckt sich diese Pflanzen- bzw. Mooslage vorzugsweise von dem oberen Randelement bis zu dem unteren Randelement und kann dabei beispielsweise bündig mit dem oberen und dem unteren Randelement abschließen. Ferner ist es möglich, die Mooslage als Basislage vorzusehen und auf dieser Mooslage eine Pflanzenmateriallage anzubringen, die keine Mooslage ist.

Dabei kann in einer zweckmäßigen Ausführungsform vorgesehen sein, dass die Pflanzentrageeinheit vorderseitig und gegebenenfalls auch rückseitig über ein umlaufendes Randelement verfügt. Insbesondere bei Verwendung von umlaufenden Randelementen kann das Pflanzenmaterial, insbesondere das Moosmaterial, in einer dicht gepackten Form, insbesondere in einer verdichteten Form, auf dem Basisareal vorliegen.

Auch haben sich solche Luftzuführeinheiten als geeignet erwiesen, die ausgelegt und eingerichtet sind, um Luft im Bereich der mindestens einen Pflanzentrageeinheit, enthaltend die mindestens eine Pflanzenlage, insbesondere die mindestens eine Mooslage, durch diese mindestens eine Pflanzenlage von der Rück- auf die Vorderseite zu transferieren, vorzugsweise mit einer durchschnittlichen Strömungsgeschwindigkeit von mindestens 0,3 m/sec, insbesondere von mindestens 0,8 m/sec und/oder vorzugsweise mit einer durchschnittlichen Strömungsgeschwindigkeit von maximal 12 m/sec, insbesondere von maximal 12 m/sec. Besonders geeignete durchschnittliche Strömungsgeschwindigkeiten betragen 0,3 bis 12 m/sec, insbesondere 0,8 bis 8 m/sec.

In einer besonders zweckmäßigen Ausgestaltung verfügt die erfindungsgemäße Baueinheit ferner über eine in der Erstreckung vom oberem zum unterem Randelement, insbesondere zwischen oberem und unterem Randelement vorliegende rückseitige flächige Pflanzentrageeinheit. Auf diese Weise kann auch die Rückseite der erfindungsgemäßen Baueinheit mit einer Pflanzenlage, insbesondere Mooslage, ausgestattet werden. In einer besonders wirksamen Ausführungsvariante der erfindungsgemäßen Baueinheit liegen demgemäß in dieser sowohl eine vorderseitige wie auch eine rückseitige flächige Pflanzentrageeinheit vor, die beide mit einer Pflanzen- oder Mooslage ausgestattet sind. Hiermit geht der weitere Vorteil einher, dass unterschiedliche Pflanzen- bzw. Moosarten für die vorder- und rückseitige Anbringung verwendet werden können. Beispielsweise kann für die rückseitige Pflanzentrageeinheit ein Pflanzen- sowie insbesondere Moosmaterial verändert werden, dass optisch weniger ansprechend ist, kostengünstiger ist und/oder mit einer geringeren Lichtausbeute auskommt.

Die erfindungsgemäße Baueinheit verfügt vorzugsweise ferner über mindestens ein Be- und Entwässerungssystem. Das Be- und Entwässerungssystem ist dabei in einer zweckmäßigen Ausgestaltung mit mindestens einer Wasserpumpe und/oder einem Wasserleitungssystem ausgestattet. Dieses Wasserleitungssystem kann dabei vorzugsweise zumindest teilweise in dem ersten Seitenrandelement, dem zweiten Seitenrandelement, dem oberen Randelement und/oder dem unteren Randelement des Rahmens bzw. in dem Randelement des Pflanzentragemoduls oder der mindestens einen Pflanzentrageeinheit vorliegen.

Das Be- und Entwässerungssystem kann ferner auch Sprühdüsen und/oder Tropfeinrichtungen umfassen, mit denen das Pflanzen- bzw. Moosmaterial kontinuierlich oder diskontinuierlich befeuchtet werden kann. Das Be- und Entwässerungssystem bzw. die Sprühdüsen und Tropfeinrichtungen können zum Beispiel über jeweils separat ansteuerbare Ventile, beispielsweise Magnetventile, betrieben werden. Mit Hilfe des Be- und Entwässerungssystems kann z.B. bewerkstelligt werden, dass das Pflanzen- bzw. Moosmaterial stets einen optimalen Feuchtegehalt aufweist. Dieser liegt bei vielen Pflanzenlagen, insbesondere bei den erfindungsgemäß eingesetzten Moosmaterialien im Durchschnitt bei mehr als 25 Gew.-%, bevorzugt mehr als 35 Gew.-%.

Durch die zumindest teilweise Anbringung des Wasserleitungssystems in dem Rahmen bzw. in Rahmenabschnitten oder den Randelementen kann, insbesondere wenn diese aus Metall gefertigt sind, bei intensiver Sonneneinstrahlung eine Überhitzung und damit auch eine Schädigung des anliegenden Pflanzenmaterials verhindert werden. Auch gelingt auf diese Weise eine sehr platzsparende Bauweise der erfindungsgemäßen Baueinheit, die es ermöglicht, ein sehr großes Areal für die Belegung mit Pflanzen- bzw. Moosmaterial zur Verfügung zu stellen.

Für viele Anwendungen hat es sich als vorteilhaft erwiesen, die vorderseitige Pflanzentrageeinheit nach Belegung mit dem Pflanzen- bzw. Moosmaterial mit mindestens eine vorderseitigen Pflanzenbefestigungseinheit bzw. Mooslagenbefestigungseinheit zu versehen. Hierbei kann es sich zum Beispiel um voneinander beabstandet verlaufende Gitterstreben handeln. In entsprechender Weise kann auch die rückseitige Pflanzentrageeinheit nach Belegung mit dem Pflanzen- bzw. Moosmaterial mit mindestens einer rückseitigen Pflanzenbefestigungseinheit ausgestattet sein. Für die Pflanzenbefestigungseinheit kann regelmäßig auf metallische oder nichtmetallische, beispielsweise kunststoffbasierte, Gitter- oder Maschenstrukturen zurückgegriffen werden. Häufig sind metallische Gitter- bzw. Maschenstrukturen besonders zweckmäßig. Hierdurch können Pflanzen- bzw. Mooslagen vorder- bzw. rückseitig an dem Basisareal, insbesondere an dem Basisareal vorder- oder rückseitig anliegende Pflanzen- bzw. Mooslagen sicher befestigt werden. Durch die Verwendung derartiger Pflanzenbefestigungseinheiten kann sichergestellt werden, dass das Pflanzenmaterial auch bei intensiveren Witterungseinflüssen wie Sturm oder Hagel in der erfindungsgemäßen Baueinheit verbleibt.

Um zum Beispiel die Wasserpumpe der erfindungsgemäßen Baueinheit mit Strom zu versorgen, hat es sich als vorteilhaft erwiesen, diese mit mindestens einer Stromversorgungseinheit auszustatten. Eine derartige Stromversorgungseinheit kann dabei auch mit mindestens einer Energiespeichereinheit versehen sein. Hierbei kann letztere zum Beispiel auch mit einer Fotovoltaik-Solaranlage verbunden sein, die vorzugsweise an dem Gebäude vorliegt, das auch mit der erfindungsgemäßen Baueinheit belegt ist.

Besonders bevorzugte erfindungsgemäße Baueinheiten umfassen ferner mindestens einen Sensor ausgewählt aus der Gruppe bestehend aus Temperatur-, Bodenfeuchte-, Luftfeuchte-, Pflanzenlagenfeuchte-, insbesondere Mooslagenfeuchte, Windgeschwindigkeits-, Luftstrom- und Staubsensor und deren beliebigen Kombinationen. Ferner kann die erfindungsgemäße Baueinheit einen Drehzahlmesser für die Luftzuführeinheit, insbesondere einen Ventilator, aufweisen.

Die vorangehend genannten Sensoren sind zweckmäßigerweise in der Nähe der vorder- oder rückseitigen Pflanzenlage der Baueinheit angebracht. Die anhand der Sensoren aufgenommenen Daten können zum Beispiel mithilfe eines Mikroprozessors gespeichert und verarbeitet werden, um den Betrieb der Luftzuführeinheit und/oder des Be- und Entwässerungssystems zu regeln oder zu steuern. Auf diese Weise gelingt es, die Wasserversorgung des Pflanzenmaterials bzw. der Mooslage unabhängig von Wettereinflüssen vorzunehmen. Alternativ oder zusätzlich können die über die Sensoren detektieren Informationen auch an eine externe Datenverarbeitungseinheit weitergeleitet und dort ausgewertet werden, um auf diese Weise den Betrieb der Luftzuführeinheit und/oder des Be- und Entwässerungssystems zu steuern und zu regeln.

In den erfindungsgemäßen Baueinheiten kann der Rahmen ferner ein erstes Seitenrandelement und ein gegenüberliegendes zweites Seitenrandelement umfassen. Hierbei ist bevorzugt, dass das erste Seitenrandelement sich im Bereich von dem oberen zu dem unteren Randelement erstreckt, insbesondere das obere und das untere Randelement verbindet. Ferner kann zweckmäßigerweise vorgesehen sein, dass das zweite Seitenrandelement sich im Bereich von dem oberen zu dem unteren Randelement erstreckt, insbesondere das obere und das untere Randelement verbindet. Der Rahmen, insbesondere wenn aus Metall gefertigt, kann zur Stabilisierung der erfindungsgemäßen Baueinheit dienen, kann aber auch, alternativ oder zusätzlich, für die Anbringung desselben an einer Fassade, einer Wand oder einem Dach, vorzugsweise über das mindestens eine Halterungselement verwendet werden.

Ferner haben sich auch solche erfindungsgemäßen Baueinheiten als vorteilhaft erwiesen, bei denen das untere und/oder obere Randelement, insbesondere das obere Randelement und das untere Randelement, vorderseitig über die mindestens eine in der vorderseitigen Pflanzenträgereinheit vorliegende mindestens eine Pflanzenlage, insbesondere Mooslage, zumindest abschnittsweise hervorstehen und/oder bei denen das erste Seitenrandelement und/oder das gegenüberliegende zweite Seitenrandelement vorderseitig über die mindestens eine in der vorderseitigen Pflanzenträgereinheit vorliegende mindestens eine Pflanzenlage, insbesondere Mooslage, zumindest abschnittsweise hervorstehen.

Besonders bevorzugt sind solche erfindungsgemäßen Baueinheiten, bei denen das obere Randelement, das untere Randelement, das erste Seitenrandelement und das gegenüberliegende zweite Seitenrandelement vorderseitig über die mindestens eine in der vorderseitigen Pflanzenträgereinheit vorliegende mindestens eine Pflanzenlage, insbesondere Mooslage, zumindest abschnittsweise hervorstehen Es hat sich überraschend gezeigt, dass der über die Pflanzenlage hervorstehende Rahmen bzw. die hervorstehenden Rahmenelemente nicht nur optisch zu einer einem positiven Gesamteindruck beitragen, sondern die auf der vorderseitigen Pflanzenträgereinheit vorliegende Pflanzenlage auf diese Weise auch vor Witterungseinflüssen wie Sturm, Gewitter und Frost besser geschützt werden.

Insbesondere auch aus Gründen eines wirksamen Wassermanagements hat es sich als zweckmäßig erwiesen, für die erfindungsgemäßen Baueinheiten vorzusehen, dass das untere Randelement, insbesondere dem oberen Randelement zugewandt, dem oberen Randelement zugewandt eine flächige, insbesondere konkave oder konvexe, Oberflächenkontur aufweist und in Richtung von der Vorder- zur Rückseite abwärts geneigt und ausgelegt und eingerichtet ist, um anfallendes Wasser abzuleiten. Vielfach reicht bereits eine Neigung im Bereich von 3 bis 10°, beispielsweise ca. 5° völlig aus, um Wasser zügig abzuleiten. Auf diese Weise kann auftreffendes Wasser effizient abgeleitet werden, beispielsweise in ein Wasserreservoir. Alternativ oder zusätzlich kann dieses Wasser für die Bewässerung der vorder- und/oder rückseitigen Pflanzenlagen, insbesondere Mooslagen, einer darunterliegenden, mit mindestens einer Pflanzenlage versehenen Baueinheit, insbesondere erfindungsgemäßen Baueinheit, verwendet werden.

Alternativ kann vorgesehen sein, dass das untere Randelement, insbesondere dem oberen Randelement zugewandt, dem oberen Randelement zugewandt eine flächige, insbesondere konkave oder konvexe, Oberflächenkontur aufweist und in Richtung von der Rückseite- zur Vorderseite abwärts geneigt, beispielsweise mit einer Neigung im Bereich von 3 bis 10°, beispielsweise ca. 5°, und ausgelegt und eingerichtet ist, um darauf auftreffendes Wasser an der Vorderseite entlang derselben oder beabstandet hiervon schwerkraftgetrieben abzuleiten.

Als besonders vorteilhaft hat sich für die unteren Randelemente auch eine solche Ausgestaltung erwiesen, bei der das untere Randelement mindestens eine, insbesondere mindestens zwei oder drei Wasserablauföffnungen aufweist. Alternativ oder zusätzlich können darin auch mindestens ein Ablaufschlitz oder eine Ablaufrinne vorgesehen sein.

Diese liegen vorzugsweise in einem konkav geformten unteren Randelement vor. Über diese Öffnungen kann Wasser auf sehr einfache und gleichwohl effiziente Weise an darunter angebrachte, Pflanzenlagen enthaltende Baueinheiten, insbesondere erfindungsgemäße Baueinheiten, weitergeleitet werden.

Die erfindungsgemäßen Baueinheiten können bevorzugt auch als Fassadenbauelemente verwendet werden. Dabei können Sie zum Beispiel ein Vorhangfassadenelement oder ein in eine Fassade integriertes oder integrierbares Fassadenelement darstellen.

Die der Erfindung zugrunde liegende Aufgabe wird des Weiteren gelöst durch ein modulares System, enthaltend oder gebildet aus mindestens zwei, insbesondere einer Vielzahl an miteinander direkt oder indirekt verbundenen erfindungsgemäßen Baueinheiten. Darüber hinaus kann das erfindungsgemäße modulare System auch solche Ausgestaltungen umfassen, bei denen neben mindestens einer erfindungsgemäßen Baueinheit mindestens eine weitere Baueinheit vorliegt, die bis auf die Luftzuführeinheit und gegebenenfalls auch die Sensoren der erfindungsgemäßen Baueinheit im Wesentlichen entspricht. Denn es hat sich überraschend herausgestellt, dass ein hinreichender Lufttransfer von der Rückseite zu der Vorderseite der Baueinheiten durch die Pflanzenmateriallagen, insbesondere Mooslagen, auch wirksam verwirklich werden kann, wenn nicht jede Baueinheit, die das modulare System bildet, mit einer solchen Luftzuführeinheit ausgestattet ist. Demgemäß kann auch ein modulares System vorgesehen sein, enthaltend oder gebildet aus mindestens einer erfindungsgemäßen Baueinheit, insbesondere einer Vielzahl an miteinander direkt oder indirekt verbundenen erfindungsgemäßen Baueinheiten, und mindestens einer Baueinheit für Bauwerke wie Fassaden, Wände oder Dächer mit einer Vorder- und einer Rückseite, umfassend ein Pflanzentragemodul, umfassend oder gebildet aus mindestens einer Pflanzentrageeinheit, umfassend ein Basisareal, mit einer Vorder- und einer Rückseite sowie gegebenenfalls mindestens ein, insbesondere rückseitiges, Halterungselement ausgelegt und eingerichtet für die Anbringung der Baueinheit an einem Bauwerk wie Fassade, Wand oder Dach. Diese nicht erfindungsgemäße Baueinheit kommt demgemäß ohne eine Luftzuführeinheit angeordnet auf, an oder im Bereich der Rückseite des Pflanzentragemoduls aus.

Außerdem wird die der Erfindung zugrunde liegende Aufgabe gelöst durch ein Bauwerk, insbesondere eine Gebäudefassade, eine Gebäudewand und ein Gebäudedach, das mit mindestens einer erfindungsgemäßen Baueinheit und/oder mindestens einem erfindungsgemäßen modularen System ausgestattet ist.

Erfindungsgemäße Bauwerke, insbesondere in Form einer Gebäudefassade, einer Gebäudewand und/oder eines Gebäudedachs, weisen dabei vorzugsweise im Bereich der Rückseite der erfindungsgemäßen Baueinheiten mindestens eine Wärmedämmschicht, insbesondere ein Wärmedämmverbundsystem, auf. Hierbei kann die Wärmedämmschicht oder das Wärmedämmverbundsystem zweckmäßigerweise aus Glasfasern und/oder Mineralfasern gebildet sein oder diese umfassen. Auch hat es sich als besonders geeignet erwiesen, mindestens eine wasserdichte Lage zwischen der mindestens einen Baueinheit und der mindestens einen Wärmedämmungsschicht oder dem Wärmedämmverbundsystem vorzusehen. Hierdurch gelingt es, Feuchtigkeit von dem Gebäude fernzuhalten.

Das erfindungsgemäße Bauwerk, insbesondere Gebäudefassade, -wand und/oder -dach, verfügt in vielen Anwendungen frontseitig über mindestens ein Oberflächensegment. Diese Oberflächensegmente liegen dann benachbart zu den erfindungsgemäßen Baueinheiten bzw. erfindungsgemäßen modularen Systemen vor. Bei diesen Oberflächensegmenten kann es sich zum Beispiel um Steinplatten, vorgehhängte Fassadenelemente, Solarpanels oder Dachziegel handeln.

In einer weiteren vorteilhaften Ausgestaltung kann für das erfindungsgemäße Bauwerk, insbesondere in Form einer Gebäudefassade, einer Gebäudewand und/oder eines Gebäudedachs, vorgesehen sein, dass das obere Randelement und/oder das untere Randelement, insbesondere das obere Randelement und das untere Randelement der mindestens einen Baueinheit, insbesondere sämtlicher Baueinheiten, vorderseitig über das mindestens eine Oberflächensegment zumindest abschnittsweise hervorstehen und/oder dass das erste Seitenrandelement und/oder das gegenüberliegende zweite Seitenrandelement vorderseitig über das mindestens eine über das mindestens eine Oberflächensegment zumindest abschnittsweise hervorstehen oder dass das obere Randelement, das untere Randelement, das erste Seitenrandelement und das gegenüberliegende zweite Seitenrandelement vorderseitig über das mindestens eine Oberflächensegment zumindest abschnittsweise hervorstehen.

Solche erfindungsgemäßen Bauwerke, insbesondere Gebäudefassaden, Gebäudewände und/oder Dächer, sind besonders bevorzugt, bei denen mindestens eine Luftdurchtrittsöffnung ausgelegt und eingerichtet ist, um Umgebungsluft von der Vorderseite der mindestens einen Baueinheit mittels der Luftzuführeinheit auf die Rückseite dieser Baueinheit zu transferieren. Hierbei hat die Luftzuführeinheit ferner ausgelegt und eingerichtet zu sein, um diese Luft durch die mindestens eine vorderseitige Pflanzenlage, insbesondere Mooslage, sowie zuvor gegebenenfalls durch die mindestens eine rückseitige Pflanzenlage, insbesondere Mooslage, zu transferieren. Eine derartige Luftdurchtrittsöffnung kann zum Beispiel in einer Pflanzenmateriallage und/oder in dem Rahmen einer erfindungsgemäßen Baueinheit angebracht sein, beispielsweise bewerkstelligt durch ein Rohr, kann aber auch bei dem erfindungsgemäßen modularen System zwischen zwei benachbarten Baueinheiten vorliegen.

Der vorliegenden Erfindung liegt die überraschende Erkenntnis zugrunde, dass mit den erfindungsgemäßen Baueinheiten sowie mit den erfindungsgemäßen modularen Systemen und auch mit den erfindungsgemäßen Bauwerken, insbesondere Gebäudefassaden, Gebäudewänden und Gebäudedächern, eine Temperierung der Umgebungsluft gelingt. Auf diese Weise kann folglich der Bildung von Hitzeinseln insbesondere in Stadtgebieten entgegengewirkt werden. Ferner hat sich überraschend gezeigt, dass sich mit den erfindungsgemäßen Gegenständen der Staubanteil, insbesondere Feinstaubanteil, in der Umgebungsluft, insbesondere im Bereich der Gebäude, die mit den erfindungsgemäßen Gegenständen ausgestattet sind, reduzieren lässt. Ohne an eine Theorie gebunden zu sein, wird gegenwärtig vermutet, dass die Pflanzenmaterial- bzw. Mooslage den Staub- bzw. Feinstaubanteil nicht nur zurückhält bzw. aus der Umgebungsluft, die mittels der Luftzuführeinheit von der Rückseite der erfindungsgemäßen Baueinheit durch die Pflanzenmateriallage hindurch transferiert wird, herausgefiltert wird, sondern dass das Pflanzenmaterial, insbesondere Moos, diesen Staubanteil zumindest teilweise verstoffwechselt und damit abbaut. Auch hat sich gezeigt, dass sich mithilfe der erfindungsgemäßen Baueinheiten, modularen Systeme und Bauwerke wie Gebäudefassaden, -wände und -dächer der Stickoxidanteil in der Umgebungsluft verringern lässt. Zudem gelingen auch eine Lärmreduktion sowie eine Verbesserung der CO2-Bilanz. Demgemäß kann die erfindungsgemäße Baueinheit auch als sogenanntes Funktionsfassadenelement aufgefasst werden, das in der Lage ist, Umgebungsluft zu filtern, wobei gleichzeitig die Kombination mit der WDVS-und der VFH-Technologie gelingt. Von besonderem Vorteil sind auch solche erfindungsgemäßen Baueinheiten, bei denen die über Sensoren aufgenommenen Umgebungsparameter wie Feuchtigkeit, Temperatur, Windgeschwindigkeit und/oder Staubmenge mikroprozessorgesteuert dazu genutzt werden, den Luftdurchtritt mithilfe der Luftzuführeinheiten optimal zu kontrollieren. Ein weiterer Vorteil der erfindungsgemäßen Baueinheiten und der erfindungsgemäßen modularen Systeme ist, dass sie in bestehende Fassaden, Wände und Dächer integriert werden können und daher beispielsweise für die Renovierung bzw. Instandsetzung von Gebäuden ohne weiteres infrage kommen.

Weitere Merkmale und Vorteile der Erfindung ergeben sich aus der nachfolgenden Beschreibung, in der Ausführungsbeispiele der Erfindung anhand einer schematischen Zeichnung beispielhaft erläutert werden, ohne dadurch die Erfindung zu beschränken. Dabei zeigen:
- Figur 1: eine erste Ausführungsform einer erfindungsgemäßen Baueinheit in Frontansicht,
- Figur 2: eine zweite Ausführungsform einer erfindungsgemäßen Baueinheit in Frontansicht,
- Figur 3: eine schematische Darstellung von oben einer dritten Ausführungsform einer erfindungsgemäßen Baueinheit und
- Figur 4: eine schematische Darstellung von oben einer vierten Ausführungsform einer erfindungsgemäßen Baueinheit.

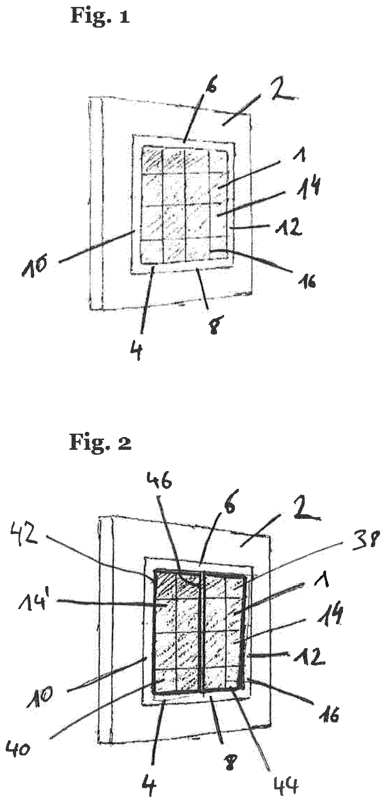

Figur 1 zeigt eine erste Ausführungsform einer erfindungsgemäßen Baueinheit 1, integriert in ein Fassadenelement 2. Die erfindungsgemäße Baueinheit 1 ist mit einem Rahmen 4 ausgestattet, der über ein oberes Randelement 6 und ein gegenüberliegendes unteres Randelement 8 verfügt sowie über erste und zweite gegenüberliegende Seitenrandelemente 10 und 12. Diese einzelnen Randelemente bilden in der dargestellten Ausführungsform ein umlaufendes Randelement. Diese ragen über die Oberfläche der umgebenden Fassade hinaus. Vorderseitig weist die Baueinheit 1 eine durchgehende Mooslage 14 auf. Diese liegt auf einer flächigen Pflanzentrageeinheit, enthaltend ein Basisareal in Form eines Netzes oder Gitters (nicht abgebildet) vor. Die Mooslage 14 wird über eine Befestigungseinheit 16 in Form von sich kreuzenden Gitterstreben 16 zusätzlich gesichert.

Figur 2 zeigt eine zweite Ausführungsform einer erfindungsgemäßen Baueinheit 1, ebenfalls integriert in ein Fassadenelement 2. Die erfindungsgemäße Baueinheit 1 ist erneut mit einem umlaufenden Rahmen 4 aus oberem und unterem Randelement 6, 8 und erstem und zweitem Seitenrandelement 10, 12 ausgestattet, welcher vorderseitig über die Oberfläche der umgebenden Fassade hinausragt. In der Baueinheit 1 liegen die Mooslagen 14 und 14' in nebeneinander angeordneten Pflanzentrageeinheiten 38 und 40 vor, welche ein Pflanzentragemodul 42 bilden. Bei beiden Pflanzentrageeinheiten 38 und 40 liegen die Mooslagen 14 und 14' jeweils auf Basisarealen, wie vorangehend geschildert, vor (nicht abgebildet). Die jeweiligen Pflanzentrageeinheiten 38 und 40 sind jeweils mit einem umlaufenden Randelement 44, 46 ausgestattet. In einer besonders zweckmäßigen Ausgestaltung können die Pflanzentrageeinheiten 38 und 40 separat aus dem Pflanzentragemodul herausgenommen und gegen eine andere, beispielsweise mit frischem Moosmaterial belegte Pflanzentrageeinheit ausgetauscht werden.

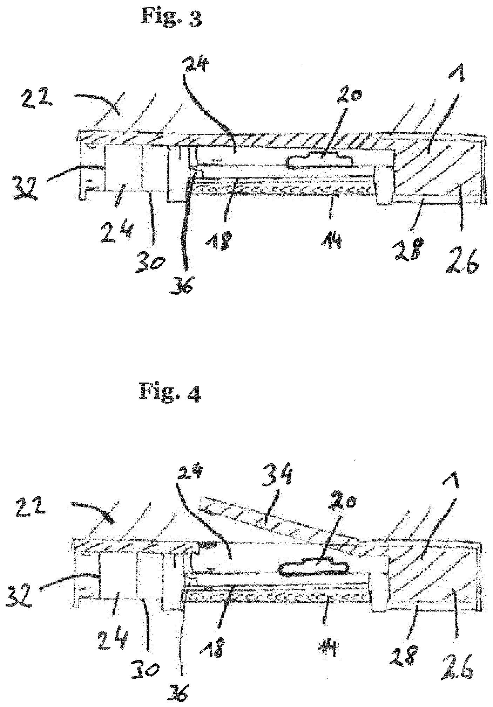

Figur 3 zeigt in schematischer Ansicht eine dritte Ausführungsform einer erfindungsgemäßen Baueinheit 1 von oben. Die Mooslage 14 liegt vorderseitig auf der flächigen Pflanzentrageeinheit 18 bzw. dem Basisareal vor. Rückseitig zu dieser Pflanzentrageeinheit 18 ist die Luftzuführvorrichtung 20 in Form eines Ventilators angebracht. Über zwischen einer Gebäudewand 22 und der Pflanzentrageeinheit 18 vorliegende Luftkanäle 24 wird Umgebungsluft über den Ventilator 20 durch die Mooslage 14 transferiert und auf diese Weise gefiltert und regelmäßig auch gekühlt. Die Vorderseite des in Figur 2 wiedergegebenen Ausschnitts einer Gebäudewand kann als WDVS System 26 ausgebildet sein und eine außenliegende Putzlage 28 aufweisen. Außerdem kann die Vorderseite durch ein vorgehängtes Fassadenelement 30 gebildet werden, das über Haltemittel 32 an einer Gebäudewand 22 angebracht vorliegt. Sensoren 36 können zum Beispiel benachbart zu der rückseitigen der Mooslage 14 vorliegen.

Figur 4 zeigt in schematischer Ansicht eine vierte Ausführungsform einer erfindungsgemäßen Baueinheit 1 von oben. Diese Ausführungsform unterscheidet sich von der dritten Ausführungsform dadurch, dass rückseitig an der Baueinheit 1 eine klappbare wärmedämmende Lage 34 vorgesehen ist. Insbesondere bei der Herstellung, Installation und Demontage kann auf diese Weise ein leichterer Zugang zu dem Ventilator 20 gelingen.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Baueinheit (1) für ein Bauwerk wie Fassade, Wand oder Dach mit einer Vorder- und einer Rückseite, umfassend
ein Pflanzentragemodul, umfassend oder gebildet aus mindestens einer Pflanzentrageeinheit (18, 38, 40), umfassend ein Basisareal, mit einer Vorder- und einer Rückseite,
mindestens ein rückseitiges Halterungselement ausgelegt und eingerichtet für die Anbringung der Baueinheit (1) an einem Bauwerk wie Fassade, Wand oder Dach, mindestens eine Luftzuführeinheit (20) angeordnet auf, an oder im Bereich der Rückseite des Pflanzentragemoduls (42) und ausgelegt und eingerichtet, um Luft im Bereich der mindestens einen Pflanzentrageeinheit (18, 38, 40) von der Rück- in Richtung der Vorderseite zu transferieren,
**dadurch gekennzeichnet, dass** die Baueinheit mindestens eine an der Vorderseite des Basisareals der Pflanzentrageeinheit (18, 38, 40) vorliegende erste Mooslage umfassend oder darstellend Laubmoos aus der Familie der *Grimmiaceae* aufweist und mindestens eine an der Rückseite des Basisareals der Pflanzentrageeinheit (18, 38, 40) vorliegende zweite Mooslage umfassend oder darstellend Laubmoos aus der Familie der Neckermoose aufweist.

2. Baueinheit nach Anspruch 1, **dadurch gekennzeichnet, dass** die erste Mooslage Polster-Kissenmoos (*Grimmia pulvinata*) aus der Laubmoos-Familie der *Grimmiaceae* umfasst oder darstellt und dass die zweite Mooslage Streifenfarn-Flachmoos (*Homalia trichomanoides*) aus der Laubmoos-Familie der Neckermoose umfasst und/oder
dass die mindestens eine Mooslage an der Vorderseite oder Rückseite im Durchschnitt mehr als 25 Gew.-%, bevorzugt mehr als 35 Gew.-%, an Wasser aufweist.

3. Baueinheit nach Anspruch 1 oder 2, **gekennzeichnet durch**
die mindestens eine an der Vorderseite des Basisareals der Pflanzentrageeinheit (18, 38, 40) vorliegende erste Mooslage und die mindestens eine an oder auf der ersten Mooslage, jenseits des Basisareals der Pflanzentrageeinheit (18, 38, 40), vorliegende mindestens eine zweite Mooslage, oder
die mindestens eine an der Rückseite des Basisareals der Pflanzentrageeinheit (18, 38, 40) vorliegende erste Mooslage und die mindestens eine an der Vorderseite des Basisareals der Pflanzentrageeinheit (18, 38, 40) vorliegende mindestens eine zweite Mooslage oder
die mindestens eine an der Rückseite des Basisareals der Pflanzentrageeinheit (18, 38, 40) anliegende zweite Mooslage und die mindestens eine an oder auf der zweiten Mooslage, jenseits der Rückseite des Basisareals der Pflanzentrageeinheit (18, 38, 40), vorliegende mindestens eine erste Mooslage.

4. Baueinheit (1) nach einem der vorangehenden Ansprüche, ferner umfassend mindestens ein Be- und Entwässerungssystem, insbesondere wobei das Be- und Entwässerungssystem mindestens eine Wasserpumpe und/oder mindestens eine Wasserleitung, vorzugsweise ein Wasserleitungssystem, umfasst, und/oder ferner umfassend mindestens eine Stromversorgungseinheit, und/oder ferner umfassend mindestens einen Drehzahlmesser für die Luftzuführeinheit (20), insbesondere den Ventilator.

5. Baueinheit (1) nach einem der vorangehenden Ansprüche, **dadurch gekennzeichnet, dass**
die mindestens eine Pflanzentrageeinheit (18, 38, 40) mindestens eine vorderseitige und/oder rückseitige Mooslagenbefestigungseinheit (16) umfasst, die vorzugsweise das Basisareal vorder- bzw. rückseitig, insbesondere die an dem Basisareal vorder- oder rückseitig anliegende mindestens eine Mooslage (14, 14') befestigt, vorzugsweise wobei die mindestens eine vorderseitige und/oder rückseitige Mooslagenbefestigungseinheit (16) eine, insbesondere metallische, Gitter- oder eine Maschenstruktur umfasst oder darstellt.

6. Baueinheit (1) nach einem der vorangehenden Ansprüche, **dadurch gekennzeichnet, dass**
das Pflanzentragemodul (42) oder die mindestens eine Pflanzentrageeinheit (18, 38, 40) bei vertikaler Ausrichtung vorderseitig über ein unteres Randelement sowie gegebenenfalls über ein gegenüberliegendes oberes Randelement verfügt, wobei sich das Basisareal der Pflanzentrageeinheit (18, 38, 40) vorzugsweise in Richtung von dem oberen zu dem unteren Randelement, insbesondere zwischen oberem und unterem Randelement, erstreckt,
vorzugsweise wobei das obere Randelement und/oder das untere Randelement, insbesondere das obere Randelement und das untere Randelement, vorderseitig über die mindestens eine in der vorderseitigen Pflanzentrageeinheit vorliegende mindestens eine Mooslage (14, 14') zumindest abschnittsweise hervorstehen und/oder wobei das erste Seitenrandelement (10) und/oder das gegenüberliegende zweite Seitenrandelement (12) vorderseitig über die mindestens eine in der vorderseitigen Pflanzentrageeinheit vorliegende mindestens eine Mooslage (14, 14') zumindest abschnittsweise hervorstehen.

7. Baueinheit (1) nach Anspruch 6, **dadurch gekennzeichnet, dass** das obere Randelement, das untere Randelement, das erste Seitenrandelement (10) und das gegenüberliegende zweite Seitenrandelement (12) vorderseitig oder rückseitig über die mindestens eine in der vorderseitigen bzw. rückseitigen Pflanzentrgeeinheit vorliegende mindestens eine Mooslage (14, 14') zumindest abschnittsweise hervorstehen, und/oder
dass das untere Randelement, insbesondere dem oberen Randelement zugewandt, eine flächige, insbesondere konkave oder konvexe, Oberflächenkontur aufweist und, insbesondere bei vertikaler Ausrichtung der Baueinheit (1), in Richtung von der Vorder- zur Rückseite abwärts geneigt und ausgelegt und eingerichtet ist, um anfallendes Wasser abzuleiten, und/oder
dass das untere Randelement, insbesondere dem oberen Randelement zugewandt, eine flächige, insbesondere konkave oder konvexe, Oberflächenkontur aufweist und in Richtung von der Rückseite- zur Vorderseite abwärts geneigt und ausgelegt und eingerichtet ist, um darauf auftreffendes Wasser an der Vorderseite entlang derselben oder beabstandet hiervon, insbesondere bei vertikaler Ausrichtung der Baueinheit (1), schwerkraftgetrieben abzuleiten und/oder
dass das untere Randelement mindestens eine, insbesondere mindestens zwei oder drei Wasserablauföffnungen und/oder mindestens einen Ablaufschlitz oder eine Ablaufrinne aufweist.

8. Baueinheit (1) nach einem der vorangehenden Ansprüche, **dadurch gekennzeichnet, dass**
die Baueinheit (1) ein Fassadenbauelement darstellt, insbesondere wobei diese Baueinheit (1) ein Vorhangfassadenelement oder ein in eine Fassade integriertes oder integrierbares Fassadeneiement darstellt, und/oder
dass die Baueinheit (1) über eine durchschnittliche Dicke verfügt, welche gemessen von der Vorder- zu der Rückseite, im Bereich von 10 cm bis 40 cm, insbesondere im Bereich von 15 cm bis 30 cm, liegt.

9. Baueinheit (1) nach einem der vorangehenden Ansprüche, **dadurch gekennzeichnet, dass**
die mindestens eine, insbesondere flächige, Pflanzentrageeinheit (18, 38, 40) oder das Basisareal eine, insbesondere metallische, Gitter- oder eine Maschenstruktur umfasst oder darstellt, vorzugsweise wobei besagte Gitterstruktur einen durchschnittlichen Abstand benachbarter Gitterstreben kleiner 10 cm, bevorzugt kleiner 8 cm und besonders bevorzugt im Bereich von 0,5 cm bis 6 cm, aufweist oder wobei die Maschenstruktur einen durchschnittlichen Maschendurchmesser kleiner 10 cm, bevorzugt kleiner 8 cm und besonders bevorzugt im Bereich von 0,5 cm bis 6 cm, aufweist.

10. Baueinheit (1) nach einem der vorangehenden Ansprüche, ferner umfassend mindestens einen Sensor (36) ausgewählt aus der Gruppe bestehend aus Temperatur-, Bodenfeuchte-, Luftfeuchte-, Mooslagenfeuchte-, Windgeschwindigkeits-, Luftstrom- und Staubsensor und deren beliebigen Kombinationen, und vorzugsweise mindestens eine mit dem mindestens einen Sensor und der mindestens einen Luftzuführeinheit (20) und gegebenenfalls dem Be- und Entwässerungssytem verbindbare oder verbundene mikroprozessorbasierte Steuer- und Regeleinheit.

11. Baueinheit (1) nach einem der vorangehenden Ansprüche, **dadurch gekennzeichnet, dass**
die Pflanzentrageeinheit (18, 38, 40) bei vertikaler Ausrichtung vorderseitig über ein unteres Randelement sowie gegebenenfalls über ein gegenüberliegendes oberes Randelement verfügt, wobei sich die mindestens eine, insbesondere flächige, Pflanzentrageeinheit (18, 38, 40) vorzugsweise in Richtung von dem oberen zu dem unteren Randelement, insbesondere zwischen oberem und unterem Randelement, erstreckt, und/oder
dass die Pflanzentrageeinheit (18, 38, 40) vorderseitig über ein umlaufendes Randelement verfügt.

12. Baueinheit (1) nach einem der Ansprüche 2 bis 11, **dadurch gekennzeichnet, dass** die mindestens eine erste, insbesondere vorderseitige, Mooslage (14, 14') eine durchschnittliche Dicke im Bereich von 4 cm bis 20 cm, insbesondere im Bereich von 6 cm bis 12 cm, aufweist und/oder dass die mindestens eine zweite, insbesondere rückseitige, Mooslage (14, 14') eine durchschnittliche Dicke im Bereich von 4 cm bis 20 cm, insbesondere im Bereich von 6 cm bis 12 cm, aufweist.

13. Baueinheit (1) nach einem der Ansprüche 2 bis 12, **dadurch gekennzeichnet, dass** die mindestens eine Luftzuführeinheit (20) ausgelegt und eingerichtet ist, um Luft im Bereich der mindestens einen Pflanzentrageeinheit (18, 38, 40), enthaltend die mindestens eine Mooslage (14, 14') durch diese mindestens eine Mooslage (14, 14') von der Rück- auf die Vorderseite zu transferieren, vorzugsweise mit einer durchschnittlichen Strömungsgeschwindigkeit von mindestens 0,3 m/sec, insbesondere von mindestens 0,8 m/sec, und/oder von maximal 12 m/sec, insbesondere maximal 8 m/sec.

14. Modulares System, enthaltend oder gebildet aus mindestens zwei, insbesondere einer Vielzahl an miteinander direkt oder indirekt verbundenen Baueinheiten (1) gemäß einem der Ansprüche 1 bis 13 oder enthaltend oder gebildet aus mindestens einer Baueinheit (1) gemäß einem der Ansprüche 1 bis 13, insbesondere einer Vielzahl an miteinander direkt oder indirekt verbundenen Baueinheiten (1) gemäß einem der Ansprüche 1 bis 13, und mindestens einer Baueinheit (1) für Bauwerke wie Fassaden, Wände oder Dächer mit einer Vorder- und einer Rückseite, umfassend ein Pflanzentragemodul (42), umfassend oder gebildet aus mindestens einer Pflanzentrageeinheit (18, 38, 40), umfassend ein Basisareal, mit einer Vorder- und einer Rückseite, mindestens ein, insbesondere rückseitiges, Halterungselement ausgelegt und eingerichtet für die Anbringung der Baueinheit (1) an einem Bauwerk wie Gebäudefassade, Gebäudewand oder Gebäudedach.

15. Bauwerk, insbesondere Gebäudefassade, Gebäudewand oder Gebäudedach, enthaltend oder gebildet aus mindestens einer Baueinheit (1) gemäß einem der Ansprüche 1 bis 13 und/oder mindestens einem modularen System nach Anspruch 14, wobei das Bauwerk vorzugsweise ferner im Bereich der Rückseite der Baueinheiten (1) oder des modularen Systems mindestens eine Wärmedämmschicht, insbesondere ein Wärmedämmverbundsystem (26) umfasst, insbesondere wobei die Wärmedämmschicht oder das Wärmedämmverbundsystem (26) aus Glasfasern und/oder Mineralfasern gebildet ist oder diese umfasst, und/oder ferner umfassend mindestens eine wasserdichte Lage zwischen der mindestens einen Baueinheit (1) und der mindestens einen Wärmedämmungsschicht oder dem Wärmedämmverbundsystem (26),

16. Bauwerk nach Anspruch 15, ferner umfassend
frontseitig mindestens ein Oberflächensegment, insbesondere benachbart zu der mindestens einen Baueinheit (1) oder dem mindestens einen modularen Systemen, vorzugsweise wobei das obere Randelement und/oder das untere Randelement, insbesondere das obere Randelement und das untere Randelement der mindestens einen Baueinheit (1) oder sämtlicher Baueinheiten (1), vorderseitig über das mindestens eine Oberflächensegment zumindest abschnittsweise hervorstehen und/oder wobei das erste Seitenrandelement (10) und/oder das gegenüberliegende zweite Seitenrandelement (12) vorderseitig über das mindestens eine über das mindestens eine Oberflächensegment zumindest abschnittsweise hervorstehen oder wobei das obere Randelement, das untere Randelement, das erste Seitenrandelement (10) und das gegenüberliegende zweite Seitenrandelement (12) vorderseitig über das mindestens eine Oberflächensegment zumindest abschnittsweise hervorstehen, und/oder
ferner umfassend mindestens eine Luftdurchtrittsöffnung, insbesondere unterhalb des unteren Randelements mindestens einer Baueinheit (1), ausgelegt und eingerichtet, um Umgebungsluft von der Vorderseite der mindestens einen Baueinheit (1) mittels der Luftzuführeinheit (20) auf die Rückseite dieser Baueinheit (1) zu transferieren.

17. Verwendung der Baueinheit (1) nach einem der Ansprüche 1 bis 13, des modularen Systems nach Anspruch 14 und/oder des Bauwerks, insbesondere der Gebäudefassade, der Gebäudewand oder des Gebäudedachs, nach einem der Ansprüche 15 oder 16 für die Temperierung der Umgebungsluft und/oder für die Reduzierung des Staubanteils, insbesondere Feinstaubanteils, in der Umgebungsluft und/oder zur Lärmreduktion und/oder zur Verbesserung der CO₂ -Bilanz.

## Claims

1. An assembly (1) for a structure like a facade, waif or roof with a front side and a back side, comprising
a plant support module, comprising or consisting of at least one plant support unit (18, 38, 40), comprising a base area, with a frontside and a backside,
at least one backside support element designed and set up to mount said assembly (1) to a structure like a facade, wall or roof, at least one air supply unit (20) arranged at, on or in the area of the backside of the plant support module (42) and designed and set up to transfer air in the area of said at least one plant support unit (18, 38, 40) from the backside in the direction of the frontside,
**characterized in that** the assembly has at least one first layer of moss present on the frontside of the base area of the plant support unit (18, 38, 40) comprising or constituting moss from the family of *Grimmiaceae*
and at least one second layer of moss present on the backside of the base area of the plant support unit (18, 38, 40) comprising or constituting moss from the family of *Neckera.*

2. The assembly according to Claim 1, **characterized in that**
the first layer of moss comprises or constitutes gray-cushioned grimmia moss (*Grimmia pulvinata*) from the moss family of *Grimmiaceae* and
**in that** the second layer of moss comprises blunt feather moss (*Homalia trichomanoides*) from the moss family of *Neckera* and/or
**in that** the at least one layer of moss on the frontside or backside has, on average, more than 25 wt. % water, preferably more than 35 wt. %.

3. The assembly according to Claim 1 or 2, **characterized by**
the at least one first layer of moss present on the frontside of the base area of the plant support unit (18, 38, 40) and the at least one at least one second layer of moss present at or on the first layer of moss, on the other side of the base area of the plant support unit (18, 38, 40), or
the at least one first layer of moss present on the backside of the base area of the plant support unit (18, 38, 40) and the at least one second layer of moss on the frontside of the base area of the plant support unit (18, 38, 40), or
the at least one second layer of moss present at the backside of the base area of the plant support unit (18, 38, 40) and the at least one first layer of moss at or on the second layer of moss, on the other side of the backside of the base area of the plant support unit (18, 38, 40).

4. The assembly (1) according to any one of the preceding Claims, further comprising at least one irrigation and drainage system, in particular wherein said irrigation and drainage system comprises at least one water pump and/or at least one water pipe, preferably a water pipe system, and/or further comprising at least one power supply unit, and/or further comprising at least one tachometer for the air supply unit (20), in particular the fan.

5. The assembly (1) according to any one of the preceding Claims, **characterized in that** the at least one plant support unit (18, 38, 40) comprises at least one frontside and/or backside moss layer attachment unit (16), which preferably attaches the base area at the frontside or backside, in particular the at least one moss layer (14, 14') at the frontside or backside of the base area, preferably wherein said at least one frontside and/or backside moss layer attachment unit (16) comprises or constitutes a grid structure or mesh structure, in particular metal.

6. The assembly (1) according to any one of the preceding Claims, **characterized in that** the plant support module (42) or the at least one plant support unit (18, 38, 40), when vertically aligned, has on its frontside a lower edge element and optionally an opposing upper edge element, wherein the base area of the plant support unit (18, 38, 40) preferably extends in the direction from the upper to the lower edge element, in particular between the upper and lower edge element,
preferably wherein the upper edge element and/or the lower edge element, in particular the upper edge element and the lower edge element, protrude, at least in sections, in the front over the at least one moss layer (14, 14') present in the frontside plant support unit and/or wherein the first side edge element (10) and/or the opposing second side edge element (12) protrude, at least in sections, in the front over the at least one moss layer (14, 14') present in the frontside plant support unit.

7. The assembly (1) according to Claim 6, **characterized in that**
the upper edge element, the lower edge element, the first side edge element (10) and the opposing second side edge element (12) protrude, at least in sections, in the front or in the back over the at least one moss layer (14, 14') present in the frontside or backside plant support unit, and/or
**in that** the lower edge element, in particular facing the upper edge element, has a flat, in particular concave or convex, surface contour and tilts downwards in the direction from the frontside to the backside, in particular when the assembly (1) is aligned vertically, and is designed and set up to draw off accumulating water, and/or
**in that** the lower edge element, in particular facing the upper edge element, has a flat, in particular concave or convex, surface contour and tilts downwards in the direction from the backside to the frontside and is designed and set up to draw off, using the force of gravity, water striking it on the frontside along the same or spaced away from it, in particular when said assembly (1) is aligned vertically, and/or
**in that** the lower edge element has at least one, in particular at least two or three water drainage openings and/or at least one drainage slit or a drainage channel.

8. The assembly (1) according to any one of the preceding Claims, **characterized in that** the assembly (1) a is facade element, in particular wherein said assembly (1) is a curtain wall element or a facade element which is integrated or integratable into a facade and/or
**in that** the assembly (1) has an average thickness in the range from 10 cm to 40 cm, in particular in the range from 15 cm to 30 cm, as measured from its frontside to its backside.

9. The assembly (1) according to any one of the preceding Claims, **characterized in that** the at least one, in particular flat, plant support unit (18, 38, 40) or the base area comprises or constitutes a grid or mesh structure, in particular metal, preferably wherein the grid structure has an average distance between adjacent struts of less than 10 cm, preferably less than 8 cm and particularly preferably in the range from 0.5 cm to 6 cm, or wherein the mesh structure has an average mesh diameter of less than 10 cm, preferably less than 8 cm and particularly preferably in the range from 0.5 cm to 6 cm.

10. The assembly (1) according to any one of the preceding Claims, further comprising at least one sensor (36) selected from the group consisting of temperature sensors, soil moisture sensors, humidity sensors, moss layer moisture sensors, wind velocity sensors, air flow sensors and dust sensors and any combination thereof, and preferably at least one microprocessor-based control and regulation unit which is combined or combinable with the at least one sensor and the at least one air supply unit (20) and optionally the irrigation and drainage system

11. The assembly (1) according to any one of the preceding Claims, **characterized in that** the plant support unit (18, 38, 40), when vertically aligned, has on the front side a lower edge element as well as optionally an opposing upper edge element, wherein the at least one, in particular flat, plant support unit (18, 38, 40) preferably extends in the direction from the upper to the lower edge element, in particular between the upper and lower edge element, and/or
**in that** the plant support unit (18, 38, 40) has a surrounding edge element on the front side.

12. The assembly (1) according to any one of Claims 2 to 11, **characterized in that** the at least first, in particular frontside, moss layer (14, 14') has an average thickness in the range from 4 cm to 20 cm, in particular in the range from 6 cm to 12 cm, and/or in that the at least one second, in particular backside, moss layer (14, 14') has an average thickness in the range from 4 cm to 20 cm, in particular in the range from 6 cm to 12 cm.

13. The assembly (1) according to any one of the Claims 2 to 12, **characterized in that** the at least one air supply unit (20) is designed and set up to transfer air to the area of the at least one plant support unit (18, 38, 40), containing the at least one moss layer (14, 14') from the backside to the frontside through said at least one moss layer (14, 14'), preferably with an average flow velocity of at least 0.3 m/sec, in particular of at least 0.8 m/sec, and/or of at most 12 m/sec, in particular of at most 8 m/sec.

14. A modular system, containing or composed of at least two, in particular a plurality of assemblies (1) according to any one of Claims 1 to 13 connected directly or indirectly to each other or containing or composed of at least one assembly (1) according to any one of Claims 1 to 13, in particular a plurality of assemblies (1) according to any one of Claims 1 to 13 connected directly or indirectly to each other, and at least one assembly (1) for structures like facades, walls or roofs with a frontside and a backside, comprising a plant support module (42), comprising or composed of at least one plant support unit (18, 38, 40), comprising a base area, with a frontside and a backside, at least one, in particular backside, support element designed and set up to mount said assembly (1) to a structure like a building facade, building wall or building roof.

15. A structure, in particular building facade, building wall or building roof, containing or composed of at least one assembly (1) according to any one of Claims 1 to 13 and/or at least one modular system according to Claim 14, wherein the structure preferably further comprises at least one thermal barrier coating, in particular a thermal insulation composite system (26) in the area of the backside of the assemblies (1) or of the modular system, in particular wherein the thermal barrier coating or thermal insulation composite system (26) is composed of or comprises glass fibers and/or mineral fibers, and/or
further comprising at least one waterproof layer between the at least one assembly (1) and the at least one thermal barrier coating or thermal insulation composite system (26).

16. The structure according to Claim 15, further comprising at least one surface segment on its frontside, in particular adjacent to the at least one assembly (1) or the at least one modular system, preferably wherein the upper edge element and/or the lower edge element, in particular the upper edge element and the lower edge element of the at least one assembly (1) or of all assemblies (1), protrudes, at least in sections, in the front over the at least one surface element and/ or wherein the first side edge element (10) and/or the opposing second side edge element (12) protrudes, at least in sections, in the front over the at least one surface segment or wherein the upper edge element, the lower edge element, the first side edge element (10) and the opposing second side edge element (12) protrude, at least in sections, in the front over said at least one surface segment, and/or
further comprising at least one air passage opening, in particular beneath the lower edge element at least of one assembly (1), designed and set up to transfer ambient air from the frontside of the at least one assembly (1) to the backside of said assembly (1) by means of the air supply unit (20).

17. Use of the assembly (1) according to any one of Claims 1 to 13 of the modular system according to Claim 14 and/or of the structure, in particular the building facade, the building wall or the building roof, according to any one of Claims 15 or 16 for controlling the temperature of the ambient air and/or for reducing the concentration of dust, in particular the concentration of fine dust, in the ambient air and/or for noise reduction and/or for improving the CO₂ balance.

## Revendications

1. Unité structurale (1) pour un bâtiment de type façade, paroi ou toit avec un côté avant et un côté arrière, comprenant :
un module de support de plantes, comprenant ou formé par au moins une unité de support de plantes (18, 38, 40), comprenant une aire de base, avec un côté avant et un côté arrière,
au moins un élément de soutien arrière conçu et configuré pour la disposition de l'unité structurale (1) sur un bâtiment de type façade, paroi ou toit, au moins une unité d'alimentation d'air (20) agencée sur, à côté de ou dans la zone du côté arrière du module de support de plantes (42) et conçue et configurée pour transférer de l'air dans la zone de ladite au moins une unité de support de plantes (18, 38, 40) depuis le côté arrière dans la direction du côté avant,
**caractérisée en ce que** l'unité structurale comprend au moins une première couche de mousse végétale présente sur le côté avant de l'aire de base de l'unité de support de plantes (18, 38, 40), comprenant ou constituée par un bryophyte de la famille des Grimmiaceae,
et au moins une deuxième couche de mousse végétale présente sur le côté arrière de l'aire de base de l'unité de support de plantes (18, 38, 40), comprenant ou constituée par un bryophyte de la famille des Neckeracées.

2. Unité structurale selon la revendication 1, **caractérisée en ce que** la première couche de mousse végétale comprend ou est constituée par une Grimmia en coussin (*Grimmia putvinata*) de la famille de bryophytes des *Grimmiaceae,* et **en ce que** la deuxième couche de mousse végétale comprend une homalie aplatie (*Homalia trichomanoides*) de la famille de bryophytes des Neckeracées, et/ou
**en ce que** ladite au moins une couche de mousse végétale sur le côté avant ou le côté arrière comprend en moyenne plus de 25 % en poids, de préférence plus de 35 % en poids, d'eau.

3. Unité structurale selon la revendication 1 ou 2, **caractérisée par** ladite au moins une première couche de mousse végétale présente sur le côté avant de l'aire de base de l'unité de support de plantes (18, 38, 40) et ladite au moins une deuxième couche de mousse végétale présente à côté de ou sur la première couche de mousse végétale, au-delà de l'aire de base de l'unité de support de plantes (18, 38, 40), ou
ladite au moins une première couche de mousse végétale présente sur le côté arrière de l'aire de base de l'unité de support de plantes (18, 38, 40) et ladite au moins une deuxième couche de mousse végétale présente sur le côté avant de l'aire de base de l'unité de support de plantes (18, 38, 40), ou
ladite au moins une deuxième couche de mousse végétale adjacente au côté arrière de l'aire de base de l'unité de support de plantes (18, 38, 40) et ladite au moins une première couche de mousse végétale présente à côté de ou sur la deuxième couche de mousse, au-delà de l'aire de base de l'unité de support de plantes (18, 38, 40).

4. Unité structurale (1) selon l'une quelconque des revendications précédentes, comprenant en outre
au moins un système d'irrigation et d'évacuation, notamment dans laquelle le système d'irrigation et d'évacuation comprend au moins une pompe à eau et/ou au moins une conduite d'eau, de préférence un système de conduites d'eau, et/ou comprenant en outre au moins une unité d'alimentation en courant, et/ou comprenant en outre au moins un compte-tours pour l'unité d'alimentation d'air (20), notamment le ventilateur.

5. Unité structurale (1) selon l'une quelconque des revendications précédentes, **caractérisée en ce que**
ladite au moins une unité de support de plantes (18, 38, 40) comprend au moins une unité de fixation de couches de mousse végétale (16) sur le côté avant et/ou sur le côté arrière, qui fixe de préférence l'aire de base sur le côté avant ou arrière, notamment ladite au moins une couche de mousse végétale (14, 14') adjacente à l'aire de base sur le côté avant ou arrière, ladite au moins une unité de fixation de couches de mousse végétale (16) sur le côté avant et/ou sur le côté arrière comprenant ou constituant de préférence une structure de réseau ou de mailles, notamment métallique.

6. Unité structurale (1) selon l'une quelconque des revendications précédentes, **caractérisée en ce que**
le module de support de plantes (42) ou ladite au moins une unité de support de plantes (18, 38, 40) dispose lors d'une orientation verticale sur le côté avant d'un élément de bord inférieur, ainsi qu'éventuellement d'un élément de bord supérieur opposé, l'aire de base de l'unité de support de plantes (18, 38, 40) s'étendant de préférence dans la direction allant depuis l'élément de bord supérieur vers l'élément de bord inférieur, notamment entre l'élément de bord supérieur et l'élément de bord inférieur, l'élément de bord supérieur et/ou l'élément de bord inférieur, notamment l'élément de bord supérieur et l'élément de bord inférieur, dépassant de préférence au moins en sections sur le côté avant au-dessus de ladite au moins une couche de mousse végétale (14, 14') présente dans l'unité de support de plantes sur le côté avant et/ou le premier élément de bord latéral (10) et/ou le deuxième élément de bord latéral opposé (12) dépassant au moins en sections sur le côté avant au-dessus de ladite au moins une couche de mousse végétale (14, 14') présente dans l'unité de support de plantes sur le côté avant.

7. Unité structurale (1) selon la revendication 6, **caractérisée en ce que** l'élément de bord supérieur, l'élément de bord inférieur, le premier élément de bord latéral (10) et le deuxième élément de bord latéral opposé (12) dépassent au moins en sections sur le côté avant ou sur le côté arrière au-dessus de ladite au moins une couche de mousse végétale (14, 14') présente dans l'unité de support de plantes sur le côté avant ou sur le côté arrière, et/ou
**en ce que** l'élément de bord inférieur, notamment faisant face à l'élément de bord supérieur, présente un contour de surface plat, notamment concave ou convexe, et, notamment lors d'une orientation verticale de l'unité structurale (1), est incliné vers le bas dans la direction allant du côté avant vers le côté arrière, et est conçu et configuré pour évacuer l'eau formée, et/ou
**en ce que** l'élément de bord inférieur, notamment faisant face à l'élément de bord supérieur, présente un contour de surface plat, notamment concave ou convexe, et est incliné vers le bas dans la direction allant du côté arrière vers le côté avant, et est conçu et configuré pour évacuer, entraînée par la force de pesanteur, l'eau formée sur le côté avant le long de celui-ci ou à distance de celui-ci, notamment lors d'une orientation verticale de l'unité structurale (1), et/ou
**en ce que** l'élément de bord inférieur comprend au moins une, notamment au moins deux ou trois ouvertures d'évacuation d'eau et/ou au moins une fente d'évacuation ou une gouttière d'évacuation.

8. Unité structurale (1) selon l'une quelconque des revendications précédentes, **caractérisée en ce que** l'unité structurale (1) constitue un élément structural de façade, notamment dans laquelle cette unité structurale (1) constitue un élément de façade en rideau ou un élément de façade intégré ou intégrable dans une façade, et/ ou
**en ce que**
l'unité structurale (1) dispose d'une épaisseur moyenne, mesurée depuis le côté avant jusqu'au côté arrière, dans la plage allant de 10 cm à 40 cm, notamment dans la plage allant de 15 cm à 30 cm.

9. Unité structurale selon l'une quelconque des revendications précédentes, **caractérisée en ce que**
ladite au moins une unité de support de plantes, notamment plate (18, 38, 40) ou l'aire de base comprend ou constitue une structure de réseau ou de mailles, notamment métallique, ladite structure de réseau présentant de préférence un écart moyen entre des entretoises de réseau voisines inférieur à 10 cm, de préférence inférieur à 8 cm et de manière particulièrement préférée dans la plage allant de 0,5 cm à 6 cm, ou la structure de mailles présentant un diamètre de maille moyen inférieur à 10 cm, de préférence inférieur à 8 cm et de manière particulièrement préférée dans la plage allant de 0,5 cm à 6 cm.

10. Unité structurale (1) selon l'une quelconque des revendications précédentes, comprenant en outre
au moins un capteur (36) choisi dans le groupe constitué par les capteurs de température, d'humidité du sol, d'humidité de l'air, d'humidité de la couche de mousse végétale, de vitesse du vent, de courant d'air et de poussière et leurs combinaisons quelconques, et de préférence au moins une unité de commande et de régulation à base d'un microprocesseur raccordable ou raccordée avec ledit au moins un capteur et ladite au moins une unité d'alimentation d'air (20) et éventuellement le système d'irrigation et d'évacuation.

11. Unité structurale (1) selon l'une quelconque des revendications précédentes, **caractérisée en ce que**
l'unité de support de plantes (18, 38, 40) dispose lors d'une orientation verticale sur le côté avant d'un élément de bord inférieur, ainsi qu'éventuellement d'un élément de bord supérieur opposé, ladite au moins une unité de support de plantes, notamment plate (18, 38, 40) s'étendant de préférence dans la direction allant depuis l'élément de bord supérieur vers l'élément de bord inférieur, notamment entre l'élément de bord supérieur et l'élément de bord inférieur, et/ou
**en ce que** l'unité de support de plantes (18, 38, 40) dispose sur le côté avant d'un élément de bord circonférentiel.

12. Unité structurale (1) selon l'une quelconque des revendications 2 à 11, **caractérisée en ce que**
ladite au moins une première couche de mousse végétale, notamment avant (14, 14') présente une épaisseur moyenne dans la plage allant de 4 cm à 20 cm, notamment dans la plage allant de 6 cm à 12 cm, et/ou **en ce que** ladite au moins une deuxième couche de mousse végétale, notamment arrière (14, 14') présente une épaisseur moyenne dans la plage allant de 4 cm à 20 cm, notamment dans la plage allant de 6 cm à 12 cm.

13. Unité structurale (1) selon l'une quelconque des revendications 2 à 12, **caractérisée en ce que**
ladite au moins une unité d'alimentation d'air (20) est conçue et configurée pour transférer de l'air dans la zone de ladite au moins une unité de support de plantes (18, 38, 40), contenant ladite au moins une couche de mousse végétale (14, 14'), au travers de cette au moins une couche de mousse végétale (14, 14') depuis le côté arrière vers le côté avant, de préférence avec une vitesse d'écoulement moyenne d'au moins 0,3 m/s, notamment d'au moins 0,8 m/s, et/ou d'au plus 12 m/s, notamment d'au plus 8 m/s.

14. Système modulaire, contenant ou formé par au moins deux, notamment une pluralité d'unités structurales (1) selon l'une quelconque des revendications 1 à 13 raccordées directement ou indirectement les unes avec les autres, ou contenant ou formé par au moins une unité structurale (1) selon l'une quelconque des revendications 1 à 13, notamment une pluralité d'unités structurales (1) selon l'une quelconque des revendications 1 à 13 raccordées directement ou indirectement les unes avec les autres, et au moins une unité structurale (1) pour des bâtiments tels que des façades, des parois ou des toits avec un côté avant et un côté arrière, comprenant un module de support de plantes (42), comprenant ou formé par au moins une unité de support de plantes (18, 38, 40) comprenant une aire de base, avec un côté avant et un côté arrière, au moins un élément de soutien, notamment arrière, conçu et configuré pour la disposition de l'unité structurale (1) sur un bâtiment tel qu'une façade d'immeuble, une paroi d'immeuble ou un toit d'immeuble.

15. Bâtiment, notamment façade d'immeuble, paroi d'immeuble ou toit d'immeuble, contenant ou formé par au moins une unité structurale (1) selon l'une quelconque des revendications 1 à 13 et/ou au moins un système modulaire selon la revendication 14, le bâtiment comprenant de préférence en outre dans la zone du côté arrière des unités structurales (1) ou du système modulaire au moins une couche d'isolation thermique, notamment un système composite d'isolation thermique (26), la couche d'isolation thermique ou le système composite d'isolation thermique (26) étant notamment formé par des fibres de verre et/ou des fibres minérales ou comprenant celles-ci, et/ou
comprenant en outre au moins une couche étanche à l'eau entre ladite au moins une unité structurale (1) et ladite au moins une couche d'isolation thermique ou ledit au moins un système composite d'isolation thermique (26).

16. Bâtiment selon la revendication 15, comprenant en outre
sur le côté frontal au moins un segment de surface, notamment voisin de ladite au moins une unité structurale (1) ou dudit au moins un système modulaire, l'élément de bord supérieur et/ou l'élément de bord inférieur, notamment l'élément de bord supérieur et l'élément de bord inférieur de ladite au moins une unité structurale (1) ou de toutes les unités structurales (1) dépassant de préférence au moins en sections sur le côté avant au-dessus dudit au moins un segment de surface, et/ou le premier élément de bord latéral (10) et/ou le deuxième élément de bord latéral opposé (12) dépassant au moins en sections sur le côté avant au-dessus dudit au moins un segment de surface, ou l'élément de bord supérieur, l'élément de bord inférieur, le premier élément de bord latéral (10) et le deuxième élément de bord latéral opposé (12) dépassant au moins en sections sur le côté avant au-dessus dudit au moins un segment de surface, et/ou
comprenant en outre au moins une ouverture de passage d'air, notamment en dessous de l'élément de bord inférieur d'au moins une unité structurale (1), conçue et configurée pour transférer de l'air ambiant depuis le côté avant de ladite au moins une unité structurale (1) au moyen de l'unité d'alimentation d'air (20) vers le côté arrière de cette unité structurale (1).

17. Utilisation de l'unité structurale (1) selon l'une quelconque des revendications 1 à 13, du système modulaire selon la revendication 14 et/ou du bâtiment, notamment de la façade d'immeuble, de la paroi d'immeuble ou du toit d'immeuble, selon l'une quelconque des revendications 15 ou 16 pour le conditionnement en température de l'air ambiant et/ou pour la réduction de la proportion de poussières, notamment de la proportion de poussières fines, dans l'air ambiant et/ou pour la réduction du bruit et/ ou pour l'amélioration du bilan CO₂.
